# EUROPEAN PATENT APPLICATION

(11) **EP 2 996 268 A1**
(43) Date of publication of application: **16.03.2016**
(21) Application number: 13884032.7
(22) Date of filing: 07.05.2013
(51) Int. Cl.: H04B 10/70, H04B 10/112, H04B 10/67

(54) **LIGHTWAVE COMMUNICATION PURPOSE RECEPTION APPARATUS, LIGHTWAVE COMMUNICATION APPARATUS, AND LIGHTWAVE COMMUNICATION METHOD**

(71) Applicant: Kaminao, Minoru, Naha-shi, Okinawa 900-0033 (JP)
(72) Inventor: Kaminao, Minoru, Naha-shi, Okinawa 900-0033 (JP)
(74) Representative: Jordan, Volker Otto Wilhelm
(86) International application number: PCT/JP2013/002943
(87) International publication number: WO 2014/181370

(57) **Abstract**

[Problem] To provide a receiving unit for optical communication, an optical communication apparatus and an optical communication method that are capable of performing information communication even with weak light.

[Means for Solving Problem] With a configuration in which information as to whether a photon is detected or not by each of the photon detecting devices is acquired as a digital information signal, optical communication in which the highest receivable frequency is a reciprocal of the count interval between the photons is possible.

## Description

### Technical Field

The present invention relates to a receiving unit for optical communication, an optical communication apparatus and an optical communication method, and specifically relates to a receiving unit for optical communication, an optical communication apparatus and an optical communication method that utilize a photon counting technology.

### Background Art

Photon counting devices may be used as devices for detecting weak light. A photon counting device enables detection of weak light by amplifying photoelectrons, which have been ejected by photons incident on a photomultiplier tube or an avalanche photodiode (hereinafter, simply referred to as an "APD"), to a detectable level.

A photon counting device is commonly used in applications such as spectral analysis, high energy physics, astronomy, medical diagnosis, blood analysis, environmental measurement, biotechnology, semiconductor production and material development. As an example of such a photon counting device, Patent Document 1 discloses a single photon counting device that envisages to receive radar beams from satellites.

### Document List

### Patent Document(s)

Patent Document 1: Japanese Laid-Open Patent Publication No. H7-167709

### Summary of Invention

### Technical Problem

Referring to the prior art, there are a need for improvement as well as problems as described below.
(1) A photon counting device described in patent document 1 includes a circular photo-detecting device section constituted by an assembly of a plurality of fan-shaped devices formed of APDs. It is stochastically expected that, after a certain fan type device has detected a photon and until the fan type device returns to a state where a photon can be received, a photon is detected by another fan-type device. However, such a photon counting device merely improves an apparent count rate in a 1-bit communication and it is not a device in which, when photons arrive at a plurality of fan type devices at the same time, the plurality of photon measuring devices respectively detect photons at the same time and perform information communication by a plurality of bits.
(2) In order to increase an optical intensity of weak light arriving at a light receiving device as much as possible, it is a prerequisite to provide a light condensing unit.
(3) There is no precedent in using a photon measuring technique or a photon counting technique in the field of information communication.

In other words, it is an object of the present invention to provide a receiving unit for optical communication, an optical communication apparatus and an optical communication method that can perform information communication even with weak light.

### Solution to Problem

The present invention has been made to satisfy the need for improvement or to solve the problems described below.

The receiving unit for optical communication of the present invention is characterized by including a plurality of photon detecting devices, and a controlling section configured to acquire, as a digital information signal, information as to whether a photon is detected or not by each of the photon detecting devices.

Further, the aforementioned invention may further include a time collecting section adapted to sense detection time of a photon by the plurality of photon detecting devices.

Further, the aforementioned invention may further include an integrating section adapted to accumulate, for a certain period of time, information as to whether a photon has been detected or not by the plurality of photon detecting devices into a single digital information signal.

Further, the aforementioned invention may further include diffusing means or light condensing means disposed in front of the plurality of photon detecting devices.

Further, an optical communication apparatus according to the present invention is provided with a receiving unit for optical communication according to the present invention and a light source selecting device provided in front of the optical communication apparatus, characterized in that the light source space selecting device is provided with at least a space dividing device, the space dividing device comprising an assembly of mirrors that are arranged on a planar space, each mirror being capable of freely changing an angle of reflection thereof, the space dividing device being capable of switching whether or not to introduce a plurality of beams incident on the assembly to a photoreceiver by controlling the angles of reflection of the mirrors.

Further, an optical communication method according to the present invention is characterized by acquiring, as a digital information signal, information as to whether a photon has been detected or not by a plurality of photon detecting devices.

### Effects of Invention

According to the present invention, at least one of the effects described below can be obtained.
(1) Information communication using weak light can be performed.
(2) Information communication by parallel transmission using weak light can be performed.
(3) An influence of a background noise by another light source can be decreased by acquiring information as to whether a photon for every photon detecting device has been detected or not at every predetermined time.
(4) By using a photon counting device as a photon detecting device, with the number of photon detecting devices being greater than the number of photons assumed in weak transmission light, subsequent photons that arrive during a pulse recovery time of the photon counting device that has detected a photon can be sensed with the remaining APDs. Thus, information communication at an interval near an electron avalanche time interval is possible. That is to say, it is possible to perform optical communication in which the highest receivable frequency is a reciprocal of the count interval between the photons.
(5) If needed, the number of photons (photon density) arriving at the photon detecting device can be adjusted to a suitable level by placing a light condensing means or a diffusing means in front of the photon detecting device.
(6) If needed, light from a highly coherent light source can be dispersed by placing, in front of the photon detecting device, a hologram made to correspond to a wavelength to be used in communication and to adapt to the configuration of the photon detecting device.

### Brief Description of Drawings

[Fig. 1] Fig. 1 is a diagram showing a principle of a receiving unit for optical communication of Embodiment 1.
[Fig. 2A] Fig. 2A is a diagram showing a principle of a receiving unit for optical communication (diffusing means) of Embodiment 2.
[Fig. 2B] Fig. 2B is a diagram showing a principle of a receiving unit for optical communication (light condensing means) of Embodiment 2.
[FIG. 2C] Fig. 2C is a diagram showing a principle of the receiving unit for optical communication (amount-of-light limiting means) of Embodiment 2.
[FIG. 3] Fig. 3 is a diagram showing a principle of the receiving unit for optical communication of Embodiment 3.
[FIG. 4] Fig. 4 is a diagram showing a principle of the receiving unit for optical communication of Embodiment 4.
[FIG. 5] Fig. 5 is a diagram showing a principle of an optical communication apparatus of Embodiment 5.

### Description of the Preferred Embodiments

Referring now to the accompanying drawings, embodiments of a receiving unit for optical communication, an optical communication apparatus and an optical communication method according to the present invention will be described below.

### [Embodiment 1]

### (1) Overall Configuration

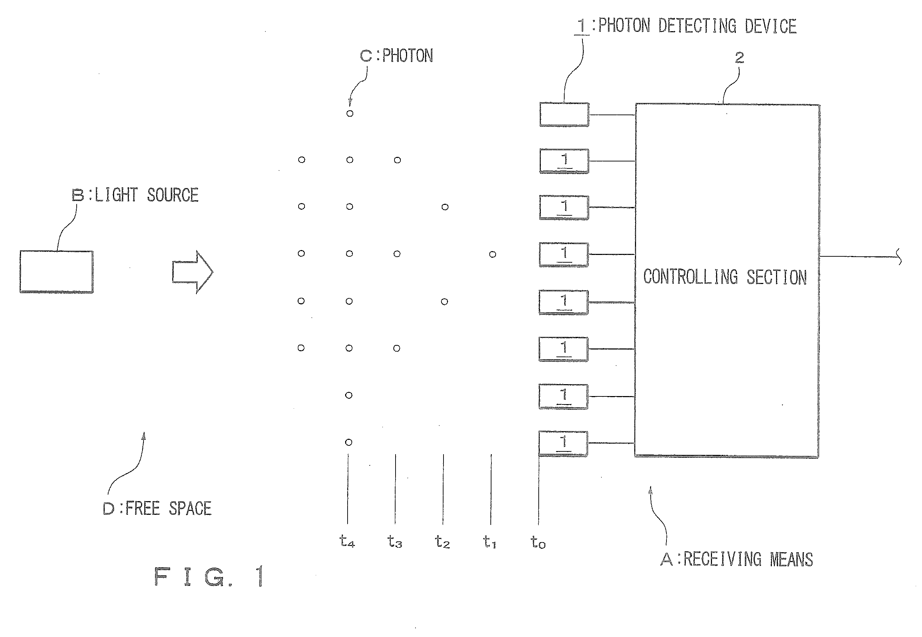

Fig. 1 is a diagram showing a principle of a receiving unit for optical communication of Embodiment 1.

The receiving unit for optical communication of the present invention is provided with at least a receiving means A for receiving light. The receiving unit for optical communication of the present invention carries out information communication by detecting a temporal change in the number of photons, not an absolute number of photons received by the receiving means A.

In addition to the receiving means A, the receiving unit for optical communication of the present invention may include a transmitting means provided with a light source B for projecting light to another optical communication apparatus, but it is not an indispensable component in the present invention. A method of providing the transmitting means may be selected as appropriate within a scope of the known art in a usage environment.

The light source B may be a known member that can irradiate beams such as LED light or a laser beam.

Hereinafter, a description will be made of each member.

### (2) Receiving Means

The receiving means A is a means for receiving transmission light from the light source B.

The receiving means A is provided with at least a plurality of photon detecting devices 1 and a controlling section 2 configured to control a digital information acquiring process based information as to whether or not photons C have been detected by the plurality of photon detecting devices 1.

### (2-1) Photon Detecting Device

The photon detecting device 1 is a device for detecting a photon.

### [Exemplary Photon Detecting Device]

The photon detecting device 1 may be a known photon counting device (photon counting device) that is capable of detecting and counting the number of photons C that were incident during a certain period of time and serving as an optical signal.

For example, a member that can be used as the photon detecting device 1 includes a combination of an avalanche photodiode (APD) used in Geiger mode and a quenching resistor, a photomultiplier tube, and a single or a plurality of multi-pixel photon counting (MPPC) devices.

### [Number of Photon Detecting Devices]

It is desirable to provide as many photon detecting devices 1 as possible, since this will increase the number of photons C that can be detected simultaneously.

### [Arrangement of Photon Detecting Device]

A plurality of photon detecting devices 1 are arranged two-dimensionally or three-dimensionally to form a light-receiving face of the receiving means A that is configured to receive light from the light source B. For example, the photon detecting devices 1 may be arranged so as to be substantially flush with each other or may be arranged to form a three-dimensional curved surface.

### [Light Receiving Face Adjusting Function]

It is desirable for the plurality of photon detecting devices 1 to have such a structure that a spatial position of each of the photon detecting devices 1 can be changed as appropriate. This is because, when there are a plurality of light sources B, it is useful in adjusting the light receiving face to the most suitable geometry to more effectively receive light from a particular light source B.

### (2-2) Controlling Section

The controlling section 2 is a device configured to acquire, as a digital information signal, information as to whether a photon C has been detected or not by each of the photon detecting devices 1.

The controlling section 2 is capable of converting information that indicates whether a photon C has been detected or not by each of the photon detecting devices 1 into a digital signal, and synchronizing the photon detecting devices 1 to send the digital signals out as a piece of data including a plurality of bits, and also capable of counting digital signals for each photon detecting device 1.

### (2-3) Basic Principle

Referring to Fig. 1, a basic principle of the optical communication apparatus of the present invention will be described.

In the present invention, a change in an intensity of light (the number of photons C or density) transmitted from a light source B to a free space D is taken as transmission information.

### [Method of Acquiring Information Signal (1)]

Various methods are conceivable as a method of acquiring an information signal from an intensity of light.

For example, with a configuration in which a detection time of a photon C by the photon detecting device 1 can be sensed, there is a method in which information as to whether a photon C has been detected or not is captured for every predetermined timing and acquired as a digital information signal.

Assuming that an optical communication apparatus has eight photon detecting devices 1 as shown in Fig. 1, at time t0, since no photon has arrived, an 8-bit data string such as "00000000" can be acquired.

Whereas, in a case where a single photon has arrived at time t1, by defining an output of the photon detecting device 1 that has detected as 1 and an output of other photon detecting devices as 0, an 8-bit data string such as "00010000" can be acquired.

### [Method of Acquiring Information Signal (2)]

In addition, there is a method in which the number of detection of the photons C which have arrived during a predetermined period is counted, and the count information is acquired as a digital information signal.

For example, when a single photon C is detected at t₁, and two photons C are detected at t₂, the number of photons C detected during this period "3 ('11')" can be determined as digital communication information.

### [Other Publicly Known Technology]

Note that, the present embodiment does not consider cases in which: a photon C emitted from the light source B did not arrive at any of the photon detecting devices 1; a plurality of the photons C have arrived simultaneously at a certain photon detecting device 1; other photons C have arrived before the photon detecting device 1 returns to a detectable state; and an existence of photons C (noise) from other light sources B.

However, these events can be dealt with by techniques such as a known correction technique in data communications.

According to the present example, by using a plurality of photon detecting devices, it is at least possible to perform information communication in accordance with a temporal change in the number of photons that were counted.

### [Embodiment 2]

The present invention may have a configuration in which diffusing means E, light condensing means F or amount-of-light limiting means G, or any appropriate combination thereof is disposed in front of the photon detecting device 1 such that the photon C can be singly incident on the photon detecting device 1.

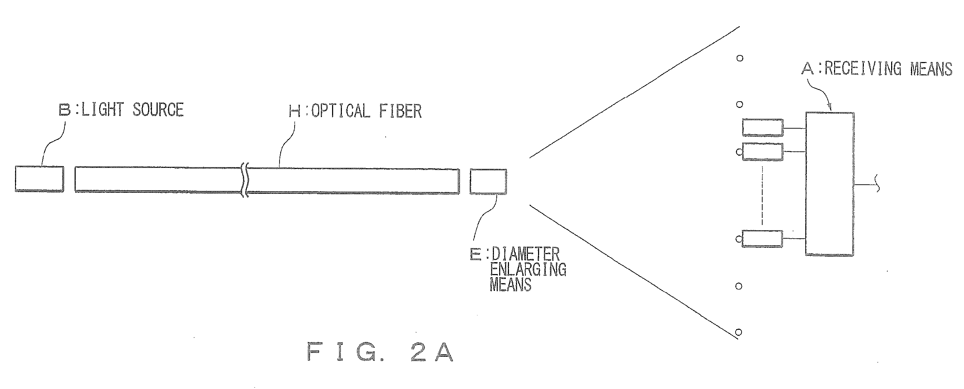

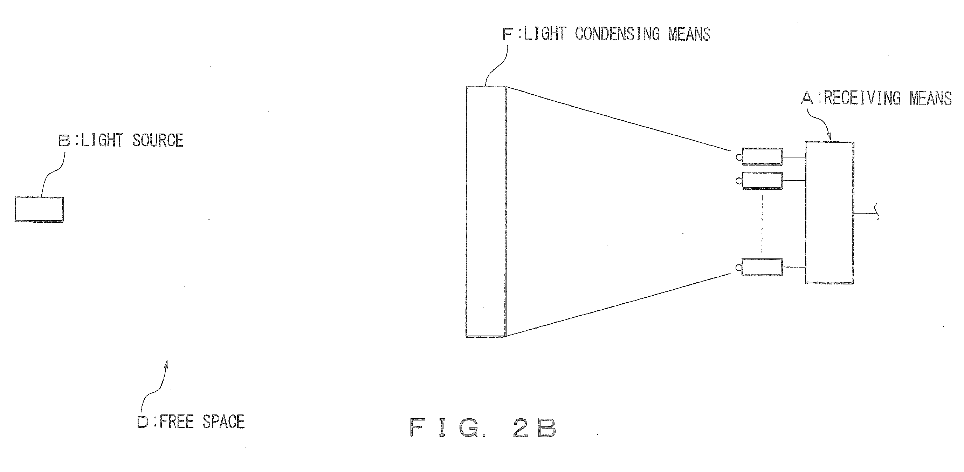

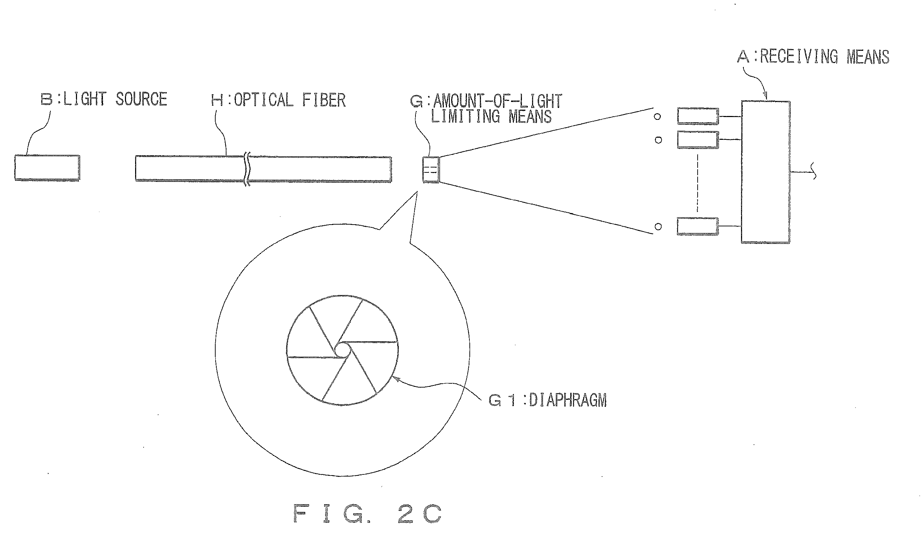

Hereinafter, each example will be described with reference to Fig. 2.

### (1) Example of Arrangement of Diffusing Means

Fig. 2A shows an embodiment in which the diffusing means E is provided in front of the receiving means A.

The diffusing means F may be a known member that is capable of expanding the diameter of a beam or diffusing light such as a beam expander.

In the present embodiment, it is assumed that light from the light source B and through an optical fiber H arrives near the receiving means A in a state where an intensity is strong to a certain extent.

When such light is directly received by the receiving means A, there may be a case where photons C having a value greater than or equal to a tolerance value of the receiving means A arrive simultaneously.

Accordingly, by adjusting the number of photons C (photon density) arriving the photon detecting device to an appropriate level with the diffusing unit E placed in front, it is possible to suppress the probability of an occurrence that a plurality of photons arrive at a single photon detecting device 1 simultaneously, and a more accurate and stable information communication can be performed.

### (2) Examples of Arrangement of Light Condensing Means

Fig. 2B shows an embodiment in which the light condensing means F is provided in front of the receiving means A.

The light condensing means F may be a known member that is capable of reducing the diameter of the beam or condensing light such as a condenser lens.

In the present embodiment, it is assumed that light from the light source B diffuses in a free space D, and, in the vicinity of the receiving means A, the light intensity has come to a weaker state than assumed.

When such light is directly received by the receiving means A, there may be a case where the number of photons C which should be detected by the receiving means A is insufficient.

Accordingly, by adjusting the number of photons C (photon density) arriving at the photon detecting device 1 to an appropriate level by the light condensing means F, a more accurate and stable information communication can be performed.

### (3) Example of Arrangement of Amount of Light Limiting Means

Fig. 2C shows an embodiment in which the amount of light limiting means G is provided in front of the receiving means A.

The amount-of-light limiting means G may be a known member that is capable of limiting an amount of light such as a diaphragm G1, a polarizing plate, an ND (Normal Density) filter or a dimming filter.

Accordingly, similarly to the aforementioned diffusing means E, by adjusting the number of photons C (photon density) arriving at the photon detecting device to an appropriate level with the amount-of-light limiting means G placed in front, the amount-of-light limiting means G enables to suppress the probability of an occurrence that a plurality of photons arrive at a single photon detecting device 1 simultaneously, and a more accurate and stable information communication can be performed.

### [Embodiment 3]

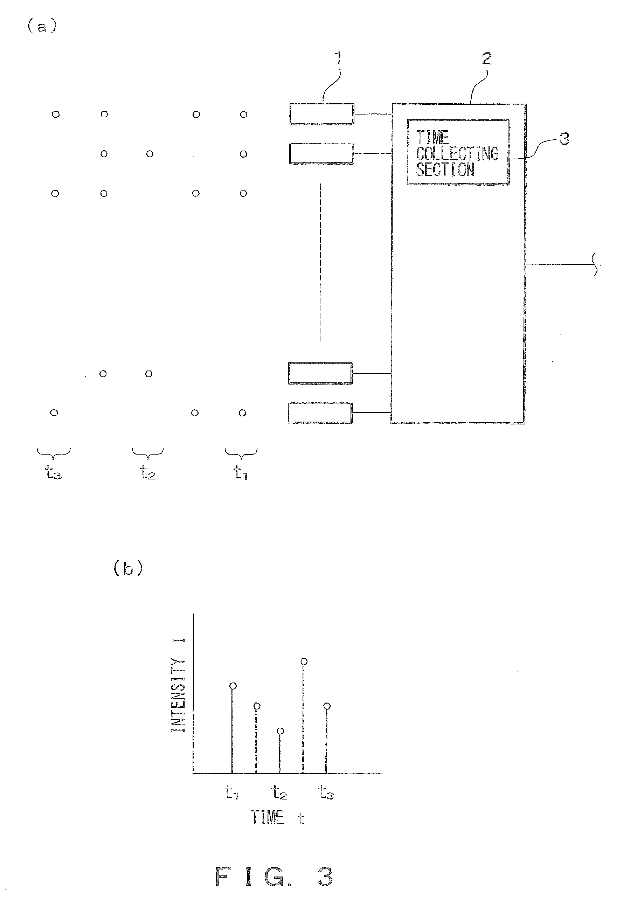

The present invention may be further provided with a time collecting section 3 that is configured to collect detection time of a photon C by the photon detecting device 1 (FIG. 3(a)).

The time collecting section 3 may be provided as a single function in the controlling section 2 or may be provided for each photon detecting device 1.

The time collecting section 3 may be configured to store time at which each photon detecting device 1 has detected a photon C, and the controlling section 2 may be configured to acquire detection information of a photon C at predetermined time (t₁, t₂, t₃) as a digital information signal (Fig. 3(b)).

According to the present embodiment, by periodically outputting light emitted from the light source B, and acquiring detection information of the photon C for each period, it is useful in that removal of noise or the like from other light source B is facilitated.

### [Embodiment 4]

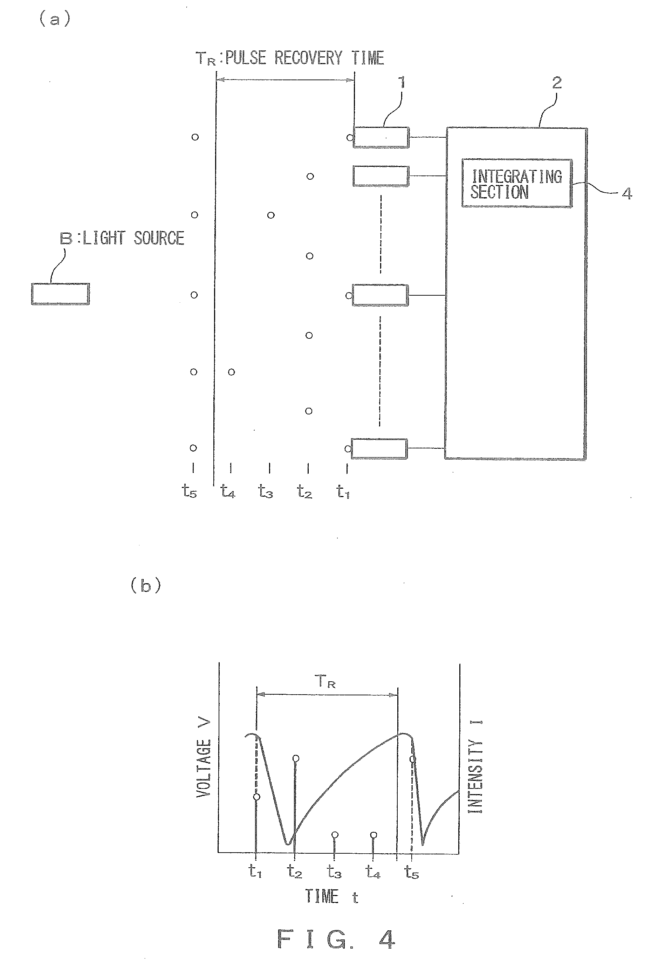

The present invention may be configured such that, with the plurality of photon detecting devices 1, other photons C that arrive before the photon detecting device 1 which has detected a certain photon C returns to a detectable state can be detected by the remaining photon detecting devices 1, and to further include an integrating section 4 that integrates the photon detection information items over a certain period of time, and provides a single transmission information item (Fig. 4).

The integrating section 4 may be provided as a single function in the controlling section 2 and an output from the controlling section 2 may be defined as transmission information, or may be provided downstream of the controlling section 2 and configured to newly generate transmission information from the digital information signal generated by the controlling section 2.

For example, it is assumed that a photon is detected by a single photon detecting device 1 at time t₁.

In a case where an APD is used as the photon detecting device 1, even if a new photon C arrives during a pulse recovery time T_{R} of the APD that has detected a photon C, a new pulse cannot be generated.

Accordingly, by expecting an arrival of a next photon C at the remaining photon detecting devices 1, it is possible to avoid a phenomenon in which it comes to a non-detection state even if a new photon C has arrived.

Note that, it is possible to increase the probability that the next photon C arrives at the remaining photon detecting devices 1 by sufficiently diffusing light or by providing much more photon detecting devices 1 than the number of photons C assumed for weak transmission light.

According to the present embodiment, it is possible to receive information at an interval which is near an avalanche time interval.

### [Embodiment 5]

A description is now made of an optical communication apparatus of the present invention.

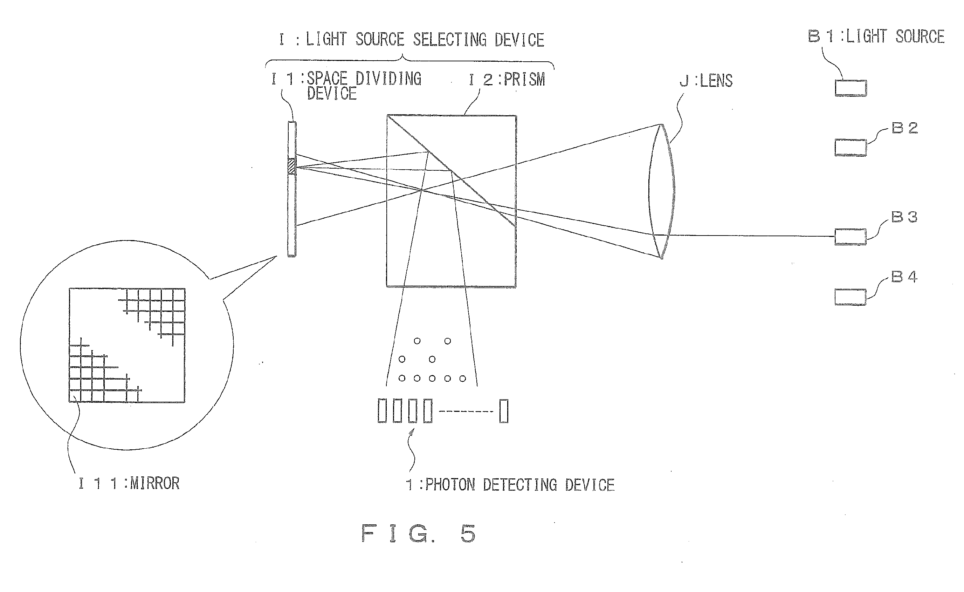

According to the present embodiment, in a case where there are a plurality of light sources B, a device that selects light from a desired light source B only (light source selecting device I) is disposed in front of the receiving means A (photon detecting device 1) (FIG. 5).

An example of a configuration of the light source selecting device I may be a combination of a space dividing device I1 and a prism I2 or a semi-transparent mirror.

The space dividing device I1 is a device which is an assembly of mirrors I11 that are arranged on a plane and each of which being capable of freely changing its angle of reflection. The space dividing device I1 is capable of switching whether or not to introduce beams from a plurality of light sources B incident on the assembly to the photon detecting device 1 by controlling the angles of reflection of the mirrors I11.

The space dividing device I1 may be a DMD (Digital Micromirror Device) or a galvanometer mirror.

Also, an arrangement configuration of the mirrors I11 is not limited to a lattice configuration only, and known array configurations may be used. Also, the mirrors I11 are configured such that their angles can be freely changed individually. Directions of reflection of the beams can be controlled by changing the angles of the mirrors.

The beams from each of the light sources B1 to B4 are directed to a projection plane of the space dividing device I1 through a lens J and the prism I2, and light spots of the same number as the number of the light sources are present on the incidence plane.

For example, in a case where only the beams from the light source B3 is to be transmitted to a photoreceiver, the angle of reflection of only the mirror I11 (mirror to be controlled) at a position of the light spot formed by the said light source is adjusted to allow reflection to the prism I2 and to transmit to the photon detecting device 1, and angles of the mirrors at portions where the beams from other light sources are projected may be controlled so as not to be transmitted to the photon detecting device 1.

According to the present invention, among a plurality of optical communication apparatuses existing in the free space, it is possible to perform an optical communication between any communication apparatuses.

### List of Reference Signs

- A: receiving means
- B: light source
- C: photon
- D: free space
- E: diffusing means
- F: light condensing means
- G: amount-of-light limiting means
- G1: diaphragm
- H: optical fiber
- I: light source selecting device
- I1: space dividing device
- I2: prism or semi-transparent mirror
- J: lens
- 1: photon detecting device
- 2: controlling section
- 3: time collecting section
- 4: integrating section

## Claims

1. A receiving unit for optical communication, **characterized by** comprising:
a plurality of photon detecting devices; and
a controlling section configured to acquire, as a digital information signal, information as to whether a photon has been detected or not by each of the photon detecting devices.

2. The receiving unit for optical communication according to claim 1, **characterized by** further comprising a time collecting section adapted to collect detection time of a photon by the plurality of photon detecting devices.

3. The receiving unit for optical communication according to claim 1 or 2, **characterized by** further comprising an integrating section adapted to accumulate, for a certain period of time, information as to whether a photon has been detected or not by the plurality of photon detecting devices into a single digital information signal.

4. The receiving unit for optical communication according to any one of claims 1 to 3, **characterized by** comprising diffusing means, amount-of-light limiting means or light condensing means disposed in front of the plurality of photon detecting devices.

5. An optical communication apparatus provided with a receiving unit for optical communication according to any one of claims 1 to 4; and a light source selecting device provided in front of the receiving unit for optical communication,
**characterized in that**:
the light source selecting device is provided with at least a space dividing device,
the space dividing device includes an assembly of mirrors that are arranged on a planar space, each mirror being capable of freely changing an angle of reflection thereof, the space dividing device being capable of switching whether or not to introduce a plurality of beams incident on the assembly to a photoreceiver by controlling the angles of reflection of the mirrors.

6. An optical communication method **characterized by** acquiring, as a digital information signal, information as to whether a photon has been detected or not by a plurality of photon detecting devices.
